# EUROPÄISCHE PATENTSCHRIFT

(11) **EP 1 097 035 B1**
(45) Veröffentlichungstag und Bekanntmachung des Hinweises auf die Patenterteilung: **29.05.2002**
(21) Anmeldenummer: 99936498.7
(22) Anmeldetag: 08.07.1999
(51) Int. Cl.: B29C 45/50, B29C 45/07

(54) **SPRITZGIESSEINHEIT FÜR EINE SPRITZGIESSMASCHINE**
INJECTION MOLDING UNIT FOR AN INJECTION MOLDING MACHINE
UNITE DE MOULAGE PAR INJECTION POUR MACHINE DE MOULAGE PAR INJECTION

(30) Priorität: 14.07.1998 DE 19831482
(43) Veröffentlichungstag der Anmeldung: 09.05.2001
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: EP9904797
(87) Internationale Veröffentlichungsnummer: WO0003860

(56) Entgegenhaltungen:
- DE-C- 4 142 927
- DE-C- 19 731 833
- GB-A- 2 331 267
- US-A- 5 421 712

## Beschreibung

Die Erfindung betrifft eine Spritzgießeinheit für eine Spritzgießmaschine zur Verarbeitung von Kunststoffen und anderer plastifizierbarer Massen nach dem Oberbegriff des Anspruches 1. Eine derartige Spritzgießeinheit dient zum Einspritzen dieser Massen in eine auf der Spritzgießmaschine festlegbare Form, wobei als einzuspritzende plastifizierbare Massen z.B. auch keramische Massen oder andere pulvrige Massen in Frage kommen.

Bei einer derartigen Spritzgießeinheit, bekannt aus der EP 0 662 382 B1 werden zwei Elektroantriebe für den Schneckenantrieb vorgesehen. Ein Motor dient zur Durchführung der Drehbewegung der Schnecke, also zum Dosieren des Materials, der andere Motor zur Durchführung der Axialbewegung der Schnecke. Beide Elektroantriebe sind als Hohlwellenmotoren ausgebildet und mit ihren Achsen fluchtend zur Achse der Schnecke und somit zur Spritzachse angeordnet. Um das Zusammenspiel der beiden Motoren zu gewährleisten, sind diese beweglich zueinander angeordnet, wobei die vom jeweiligen Rotor angetriebenen Elemente aufwendig ineinander eingreifen. Aufgrund des Ineinanderschachteins der beiden Hohlwellenmotoren können diese nur als Einheit ausgetauscht werden, was sowohl den Herstellungsaufwand als auch den Wartungsaufwand erhöht.

Aus der EP 0 723 848 A1 ist eine Spritzgießeinheit bekannt, bei der ebenfalls zwei als Hohlwellenmotoren ausgebildete Elektroantriebe zum Drehen der Schnecke und zur Axialbewegung der Schnecke eingesetzt werden. Die Motoren sind fluchtend zur Spritzachse angeordnet. Um die Bewegung der Motoren untereinander zu ermöglichen, sind mehrere ineinander greifende Keilwellen vorgesehen, so dass ein Zugriff auf die Bewegung der Förderschnecke jederzeit durch beide Motoren möglich ist. Für diese Keilnuten ist ein zusätzlicher Aufwand zu betreiben. Die Hohlwellenmotoren können, zumindest was die Rotoren dieser Motoren betrifft, nicht unabhängig voneinander ausgetauscht werden.

Aus der älteren, nachveröffentlichten Anmeldung GB-A-2 331 267, insbesondere Fig. 4 ist eine Spritzgießeinheit für eine Spritzgießmaschine bekannt, bei der Einspritzmotor und Dosiermotor auf beiden Seiten einer Trennebene angeordnet sind, wobei der Einspritzmotor in die eine Richtung wirkt, während der Dosiermotor in die andere Richtung wirkt. Hierzu sind die beiden Motoren an einer zwischengeschalteten Befestigungsplatte in Art einer "Einspritzbrücke" befestigt, die ihrerseits jedoch in keinster Weise geführt ist. Dadurch ergibt sich eine, vor allem bei der zyklischen Herstellung von Spritzteilen, ungenügende Präzision.

Ausgehend von diesem Stand der Technik liegt der vorliegenden Erfindung die Aufgabe zu Grunde, eine im Hinblick auf den Montage- und Wartungsaufwand einfach aufgebaute, kompakte Spritzgießeinheit zu schaffen.

Diese Aufgabe wird durch eine Spritzgießeinheit mit den Merkmalen des Anspruches 1 gelöst.

Die beiden Elektroantriebe sind unabhängig von einander beidseits einer Trennebene angeordnet, so dass auf aufwendige Verbindungsmechanismen verzichtet werden kann. Daher müssen sich Bauteile der einzelnen Motoren nicht durchdringen. Es kann sich damit zwischen den nach beiden Richtungen von der Trennebene weg wirkenden Elektroantrieben ein passiver Raum ausbilden, der es ermöglicht, beide Motoren an einem gemeinsamen Trageelement zu halten.

Weitere Vorteile ergeben sich aus den Unteransprüchen.
Im Folgenden wird die Erfindung an Hand der beigefügten Figuren an einem Ausführungsbeispiel näher erläutert. Es zeigen:
- Fig. 1: eine Seitenansicht einer auf einem Maschinenfuß abgestützten und an einer Form angelegten Spritzgießeinheit in Seitenansicht,
- Fig. 2: einen horizontalen Schnitt durch die Spritzgießeinheit in Höhe der Führungsholme,
- Fig. 3: einen vergrößerten Ausschnitt aus der Darstellung gemäß Fig. 2 im Bereich der Einspritzbrücke,
- Fig. 4: ein weiteres Ausführungsbeispiels des Tragelements in einer Darstellung gemäß Fig. 3,
- Fig. 5: eine Darstellung gemäß Fig. 2 in einem weiteren Ausführungsbeispiel,
- Fig. 6: einen vergrößerten Ausschnitt aus der Darstellung gemäß Fig. 5 im Bereich der Einspritzbrücke.

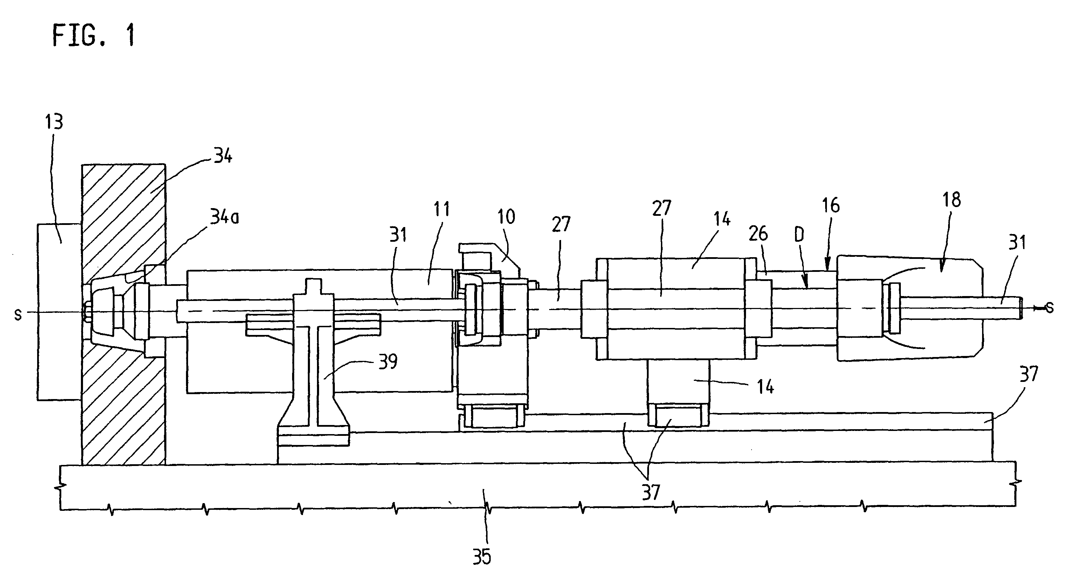

Die in Fig. 1 schematisch dargestellte Spritzgießeinheit ist Bestandteil einer Spritzgießmaschine und auf dem Maschinenfuß 35 dieser Spritzgießmaschine angeordnet. Beim Einspritzen in eine Form 13, von der in Fig. 1 links ein Teil sichtbar ist, taucht die Spritzgießeinheit in eine Durchtrittsöffnung 34a eines stationären Formträgers 34 ein. Die Spritzgießeinheit dient bei einer Spritzgießmaschine zur Verarbeitung plastifizierbarer Massen, im wesentlichen zum Einspritzen dieser Massen, wie z.B. von Kunststoffen, keramischen Massen und anderen pulvrigen Massen in den Formhohlraum der Form 13.

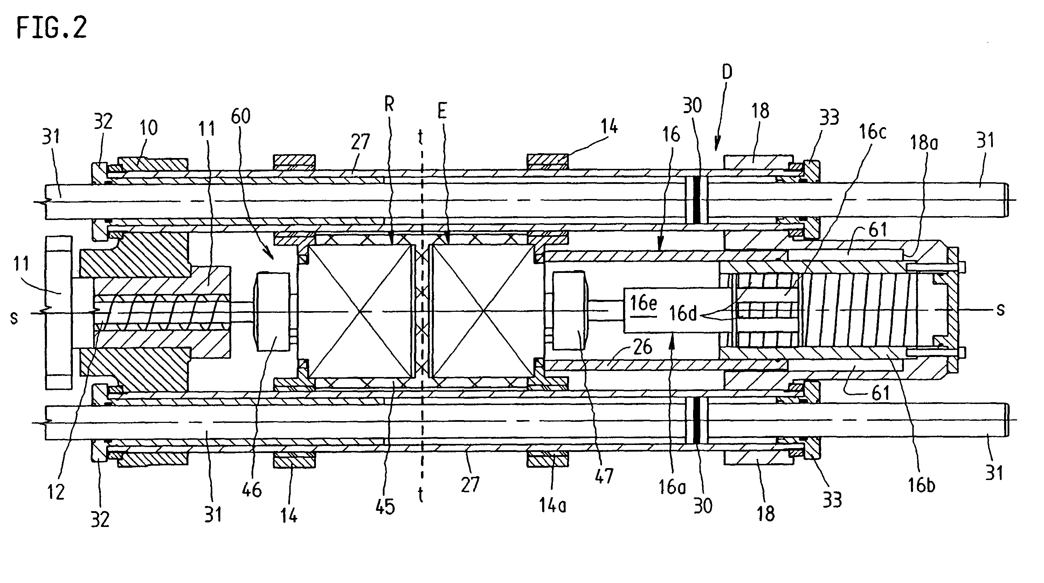

Gemäß Fig. 1 besitzt die Spritzgießmaschine einen Trägerblock 10 zur Aufnahme eines Plastifizierzylinders 11. Im Plastifizierzylinder 11 ist entlang der Spritzachse s-s die in Fig. 2 dargestellte Förderschnecke 12 zum Einspritzen der plastifizierbaren Massen in die Form 13 angeordnet. Eine Einspritzbrücke 14 ist auf Holmen 31, im Ausführungsbeispiel an auf diesen Holmen 31 angeordneten Zylindern 27 axial in Richtung der Spritzachse s-s beweglich angeordnet. Die Spritzachse s-s fällt meist mit der Mittelachse der Förderschnecke 12 zusammen. Die Einspritzbrücke 14 wird über eine elektromechanische Einspritzeinheit 16 axial bewegt, deren Linearbewegungsmittel 16a drehbeweglich an der Einspritzbrücke 14 über wenigstens ein Lagerelement 17, 53 gelagert ist. Die Bewegung des Linearbewegungsmittels 16a der Einspritzeinheit 16 zum axialen Bewegen von Einspritzbrücke 14 und Förderschnecke 12 erfolgt mittels eines ersten Elektroantriebs E, dessen Achse mit der Spritzachse s-s fluchtet.

Auf der dem ersten Elektroantrieb E gegenüberliegenden Seite der Einspritzbrücke 14 ist eine elektromechanische Dosiereinheit 60 angeordnet. Mit ihr wird die Förderschnecke 12 während der Aufbereitung im Plastifizierzylinder 11 gedreht. Hierzu ist ein zweiter Elektroantrieb R vorgesehen, dessen Achse ebenfalls mit der Spritzachse s-s fluchtet.

Gemäß Fig. 2 sind der erste und der zweite Elektroantrieb E, R an einem Tragelement 45 der Einspritzbrücke 14 angeordnet. Die Einspritzbrücke 14 selbst gleitet auf den Zylindern 27 mit zwei identischen Gleitteilen 14a je Holm 31, zwischen denen das Tragelement 45 eingespannt ist. Die Holme 31 sind am vorderen Ende der Spritzgießeinheit über einen Träger 39 abgestützt. Bei Bewegung der Einspritzbrücke 14 gleitet diese entlang einer Führung 37.

Die Elektroantriebe E,R sind an der Einspritzbrücke 14 beidseits von einer sich im wesentlichen quer zur Spritzachse s-s erstreckenden Trennebene t-t angeordnet, die den Einflußbereich des ersten Elektroantriebs E vom Einflußbereich des anderen Elektroantriebs R trennt. Ausgehend von der Trennebene t-t erstreckt sich der zweite Elektroantrieb R in Richtung auf den Plastifizierzylinder 11, während sich der erste Elektroantrieb E mit zugehörigem Linearbewegungsmittel 16a in entgegengesetzter Richtung von der Trennebene t-t wegerstreckt. Der erste Elektroantrieb E wirkt also zur Axialbewegung der Förderschnecke 12 mit seinem Linearbewegungsmittel 16a in den Figuren nach rechts, wenngleich sich über den durch Abstützelement 18, Zylinder 27 und Trägerblock 10 gebildeten Kraftrahmen auch in der Folge eine Axialbewegung der Förderschnecke 12 nach links ergeben kann. Der zweite Elektroantrieb R hingegen wirkt zur Rotation der Förderschnecke nach links. Zwischen den Motoren muß keine weitere Verbindung geschaffen werden. Es bildet sich ein passiver Raum aus, so daß die Trennebene t-t eine Grenze zwischen den beiden Motoren bildet.

Grundsätzlich wird die Trennebene wie in den Figuren meist im rechten Winkel zur Spritzachse stehen. Eine im wesentlichen sich quer zur Spritzachse s-s ersteckende Trennebene ist aber auch gegeben, wenn am Tragelement 45 z.B. zwei erste Elektroantriebe E zur Bewegung des Linearbewegungsmittels 16a links und rechts neben dem z.B. einem zweiten Elektroantrieb R der Dosiereinheit 60 wirken. Wirken die beiden ersten Elektroantriebe E gemeinsam auf ein Abstützelement 18, so liegt immer noch eine Trennung der Einflußbereiche der Motoren in den Figuren nach links und rechts einer dann mäanderartig, jedoch im wesentlichen quer zur Spritzachse verlaufenden Trennebene vor.

Diese Anordnung der beiden Elektroantriebe E,R verringert den bisher üblichen erheblichen konstruktiven Aufwand, da weder die Motoren, noch Teile der Rotoren miteinander verschachtelt werden müssen. Zur Erzeugung der Axialbewegung wird das Linearbewegungsmittel 16a über das Abstützelement 18 am Kraftrahmen und damit außerhalb der Einspritzbrücke 14 abgestützt. Dies kann zur stabileren Abstützung der gesamten Spritzgießeinheit genutzt werden. Es ist unbeachtlich, welche Motoren eingesetzt werden, was durch die angedeutete 'black box' in Fig. 2 verdeutlicht wird, sofern die Motoren geeignet sind, nach beiden Seiten der Trennebene t-t getrennt voneinander zu wirken. Langsam laufende Motoren können ebenso eingesetzt werden wie kleinere schnell laufende Motoren mit Getriebe verwendet werden, die aufgrund kleinerer Rotationsmassen dynamischer zu betätigen sind. Kleinere Motoren reduzieren auch die Trägheitsmomente.

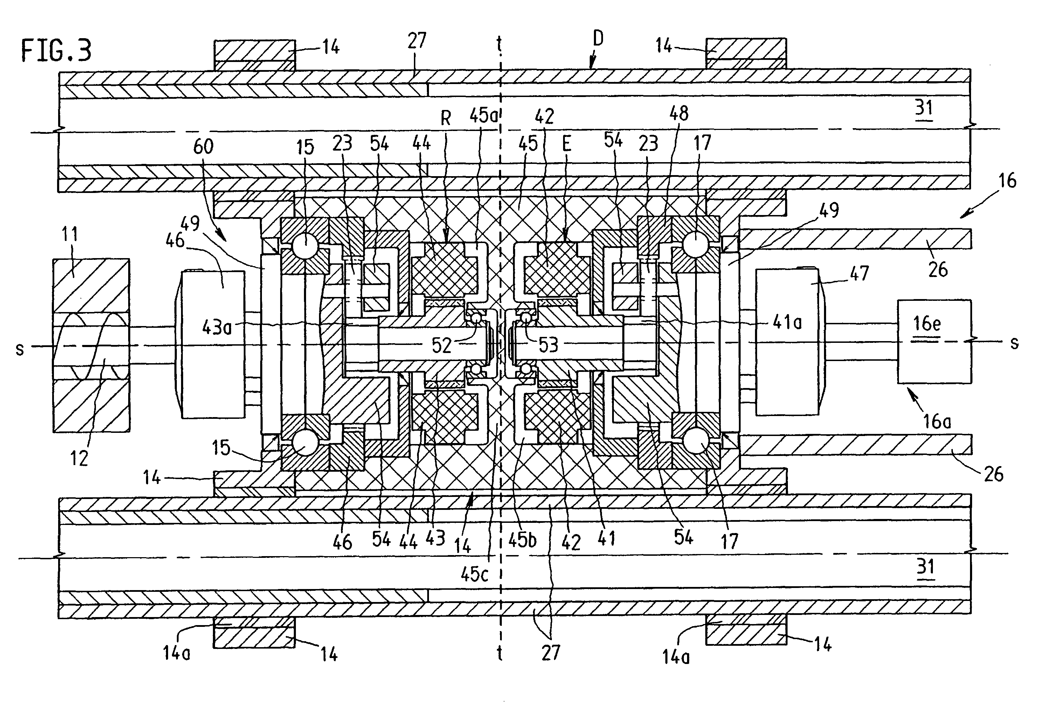

Fig. 3 verdeutlicht den Aufbau der Elektroantriebe E, R, die weitgehend baugleich sind und Rücken an Rücken in Ausnehmungen 45a, 45b des Tragelements 45 aufgenommen sind. Die beiden Ausnehmungen 45a, 45b sind durch ein durchgängiges Mittelteil 45c voneinander getrennt. Am Grund der jeweiligen Ausnehmung befindet sich zunächst der Stator 42 bzw. 44. Im Innern dieses Stators befindet sich der Rotor 41 bzw. 43 des Elektroantriebs. Dieser Rotor ist über die Lagerelemente 53 bzw. 52 am Tragelement 45 gelagert. Den Rotoren 41 bzw. 43 sind Verzahnungen 41a bzw. 43a zugeordnet, die mit Zwischenzahnrädern 23 oder Planetenrädern in Verbindung stehen. Diese Zwischenzahnräder bilden ein im Elektroantrieb oder zumindest im Tragelement 45 integriertes Planetengetriebe, so daß Elektroantrieb und Getriebe eine bauliche, im Herstellerbetrieb vorgefertigte bauliche Einheit bilden, die nur noch dem Tragelement 45 zugeführt werden muß. Die Zwischenzahnräder 23 kämmen mit einem äußeren Zahnkranz 48. Von den Zwischenzahnrädern wird die Rotation auf Mitnehmer 49 übertragen, die in der Mitte eine Anschlußachse zum Anschluß von zwei baugleichen Kupplungseinrichtungen 46, 47 tragen. Die Mitnehmer sind über Lagerelemente 17 bzw. 15 gelagert und werden durch die beiden Seitenteile der Einspritzbrücke 14 mitsamt allen weiteren Bauteilen in den Ausnehmungen 45a, 45b gehalten.

Anstelle dieses Planetengetriebes können auch beliebige andere Getriebe verwendet werden. Bedarfsweise kann durch den Einsatz langsam laufender Motoren auch ganz auf ein Getriebe verzichtet werden.

In Fig. 3 sind nicht nur die beiden Elektroantriebe baugleich, sondern auch die beiden Elektroantriebe spiegelsymmetrisch angeordnet, selbst in Bezug auf die Kupplungseinrichtungen 46, 47. Auf diese Symmetrie und Baugleichheit kann jedoch verzichtet werden. An den Kupplungseinrichtungen wird nun einerseits die Förderschnecke 12 und andererseits das Linearbewegungsmittel 16a angeschlossen. Dadurch kann bedarfsweise auch nur einer der beiden Elektroantriebe, unabhängig vom anderen ausgetauscht werden. Darüber hinaus muß beim Hersteller ein geringerer Lageraufwand getrieben werden, um die entsprechenden Elektroantriebe für das Einspritzen und das Dosieren vorzuhalten.

Fig. 2 verdeutlicht den Aufbau der Einspritzeinheit 16. Vom ersten Elektroantrieb E wird wie bereits beschrieben, das Linearbewegungsmittel 16a angetrieben. Das Linearbewegungsmittel 16a der Einspritzeinheit 16 weist einen Spindelkopf 16c auf, der in ein als Gewindehülse 16b ausgebildetes und mit dem Linearbewegungsmittel 16a zusammenwirkendes Element eintaucht. Die Gewindehülse 16b ist am Abstützelement 18 drehfest abgestützt. Zwischen Spindelkopf 16c und Gewindehülse 16b sind mehrere, mit diesen zusammenwirkende Planeten 16d angeordnet, so daß hier eine weitere Übersetzung des Drehmoments erfolgen kann. Auch dies trägt zur Beibehaltung von identischen Elektroantrieben E, R bei. Die Stange 16e des Linearbewegungsmittes 16a trägt den Spindelkopf 16c. Koaxial zur Achse der Stange 16e ist ein an der Einspritzbrücke 14 abgestütztes Rohr 26 vorgesehen, das in jeder Stellung der Einspritzeinheit 16 in Ausnehmungen 61 zwischen Gewindehülse 16b und Abstützelement 18 eintaucht. Das Abstützelement 18 bildet insofern eine topfartige Ausnehmung 18a.

Anstelle des Linearbewegungsmittels 16a können auch andere Systeme eingesetzt werden wie z.B. Spindelsysteme, Kugelrollspindeln oder Zahnstangen. Voraussetzung ist lediglich die Erzeugung einer Linearbewegung.

Die Einspritzbrücke 14 ist auf den Zylindern 27 einer hydraulischen Kolben-Zylinder-Einheit D axial beweglich angeordnet. Die Kolben-Zylinder-Einheit D dient zum Anlegen der Spritzgießeinheit an die Form 13. Führungsholme 31 bilden zugleich die Kolbenstangen für die Zylinder 27 und tragen dazu einen Ringkolben 30. Der Trägerblock 10 ist im Bereich der vorderen Zylinderdeckel 32 und das Abstützelement 18 im Bereich der hinteren Zylinderdeckel 33 festgelegt. Abstützelement 18 und Trägerblock 10 bilden zusammen mit den Zylindern 27 den starren, die Präzision erhöhenden Kraftrahmen. Zwischen Trägerblock 10 und Abstützelement 18 ist die Einspritzbrücke auf den Zylindern 27 axial beweglich, jedoch rotatorisch abgestützt.

Beim Dosieren wird der zweite Elektroantrieb R angetrieben und dreht wie eingangs erläutert die Förderschnecke 12. Mit zunehmendem aufbereitetem Material, das sich infolge der Rotation der Förderschnecke vor der Förderschnecke anhäuft, wird die Förderschnecke 12 und damit die Einspritzbrücke 14 zurückgedrückt. Zum Erhalt des vorgegebenen Staudruckes kann unter gleichzeitigem Drehen der Förderschnecke 12 mit frei wählbarem Drehmoment und frei wählbarer Drehzahl vom ersten Elektroantrieb E der Einspritzeinheit 16 die axiale Karft auf die Förderschnecke erhöht oder reduziert werden. Hierzu wird die Stange 16e gedreht, wobei durch ein Zusammenwirken der Teile der Einspritzeinheit 16 eine Axialbewegung des Linearbewegungsmittels 16a entsteht, das sich am Abstützelement 18 abstützt. Diese Bewegung führt zur gewünschten Rückzugsbewegung der Förderschnecke 12 bzw. Einspritzeinheit 16. Das anschließende Einspritzen erfolgt im wesentlichen nur mittels des ersten Elektroantriebs E in der soeben beschriebenen Weise.

Bedarfsweise kann das Rohr 26 auch als Kraftübertragungselement eingesetzt werden, um die Stange 16e zu entlasten oder anderweitig dimensionieren zu können. Hierfür ist allerdings in zeichnerisch nicht dargestellter Weise eine Verbindung zwischen Gewindehülse 16b und Druckrohr 26 zu schaffen, indem z.B. die Kräfte von der Gewindehülse 16b über die Planeten 16d auf den Spindelkopf 16c übertragen werden. Der Spindelkopf könnte dann über einen Bund auf ein Axiallagerelement einwirken und die Kräfte auf das Rohr Übertragen, was bedarfsweise unter Auskopplung des Linearbewegungsmittels erfolgen kann.

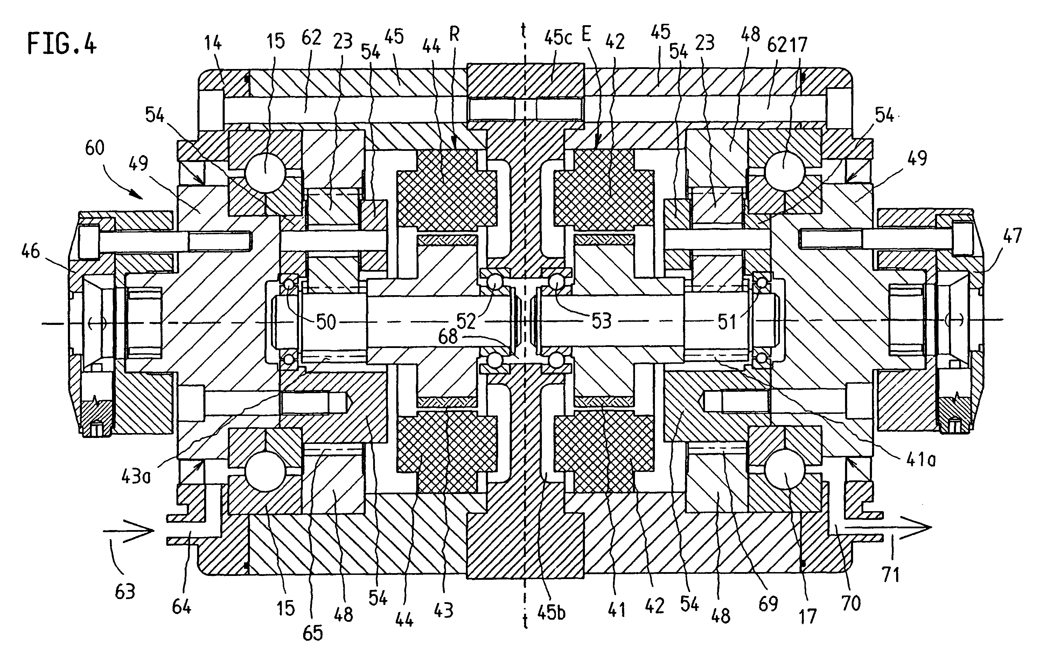

Fig. 4 zeigt eine weitere Ausführungsform des Tragelements 45. Das Mittelteil 45c ist hier ein gesondertes Teil, das über Befestigungsmittel 62 die äußeren Teile der Einspritzbrücke 14 mit den Tragelementen 45 verspannt. Dadurch sind auch die Rotoren 41, 43 im Bereich des Mittelteils 45c anders gelagert.

Ein weiterer wesentlicher Unterschied besteht allerdings im angedeuteten Kühlschmierdurchfluß. In die Einspritzbrücke 14 gelangt in Richtung des Pfeils 63 ein Medium über den Kanal 64. Es gelangt von dort in das Lager 15, durch dieses und den Kanal 65 zum Rotor 43 bis in den Durchtrittsbereich 68 zwischen den Motoren. Am Rotor 41 vorbei gelangt über den Kanal 69 und das Lager 17 zum Kanal 70, um über den Pfeil 71 abgeführt zu werden. Das Medium kann zugleich die Antriebe E,R kühlen und die beweglichen Teile schmieren. Eine Trennung zwischen Schmiermittel und Kühlmedium ist insbesondere dann nicht mehr erforderlich, wenn das Schmiermittel (Öl) zugleich das Kühlmittel ist, so daß auch nicht auf eine Abdichtung zwischen diesen Bereichen geachtet werden muß. Da für die Zylinder 27 ohnehin ein hydraulisches Medium an der Maschine vorgesehen ist, kann sogar dieses Hydraulikmedium als Schmier- und Kühlmittel eingesetzt werden.

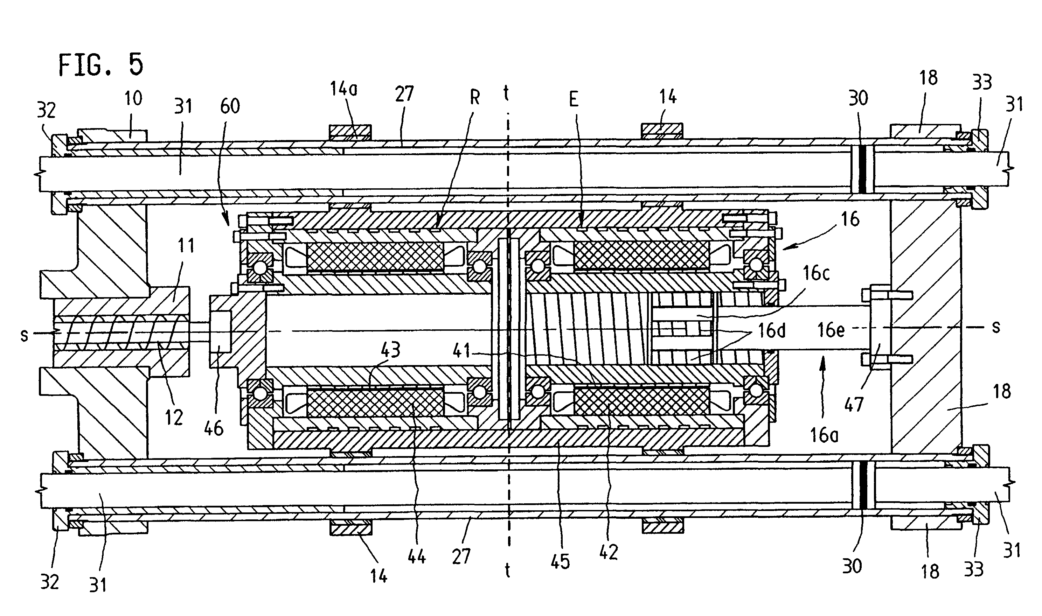

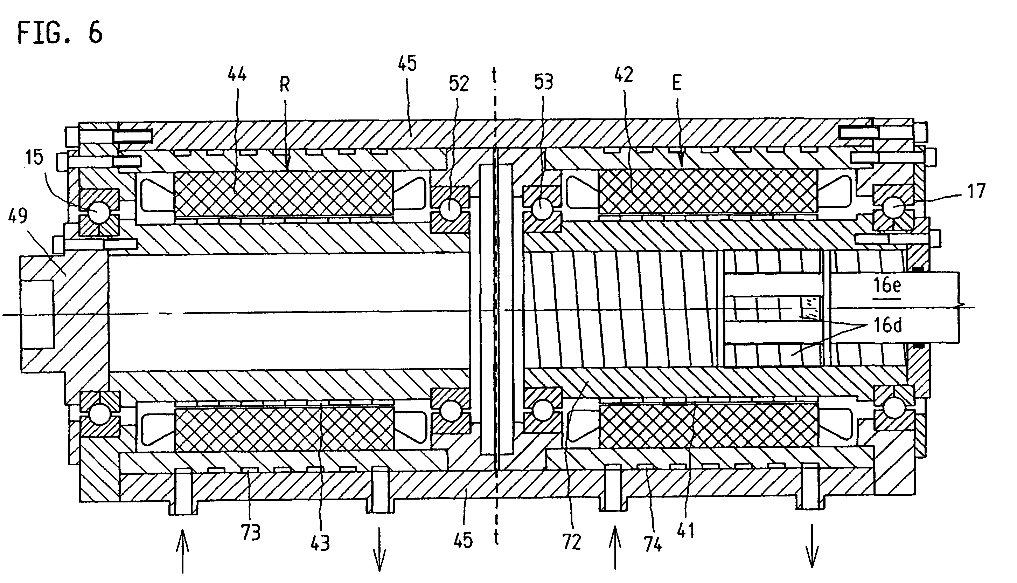

Die Figuren 5 und 6 zeigen ein weiteres Ausführungsbeispiel. Beide Elektroantriebe sind gekühlte Hohlwellenmotoren. Elektroantrieb R treibt als Rotor 43 eine Hohlwelle an, die in Fig. 6 links mit dem Mitnehmer 49 verbunden ist. Elektroantrieb E treibt über Rotor 41 eine als Gewindehülse ausgebildete hohle Welle 72 an, in die das gegenüber Fig. 3 umgekehrt arbeitende Linearbewegungsmittel 16a eingreift, das am Abstützelement 18 drehfest abgestützt ist. Die Flüssigkeitskühlung erfolgt in Pfeilrichtung über die äußerlich um die Motoren umlaufenden Kühlkanäle 73,74. Vorzugsweise wird die Länge der Hohlwelle (Rotor 43) des Hohlwellenmotors dem maximalen Hub der Förderschnecke 12 angepaßt oder entspricht demselben, wodurch die gesamte Einheit kompakter ausgebildet werden kann.

### Liste der Bezugszeichen

- 10: Trägerblock
- 11: Plastifizierzylinder
- 12: Förderschnecke
- 13: Form
- 14: Einspritzbrücke
- 14a: Gleitteil
- 15, 50, 52: Lagerelement
- 16: elektromechanische Einspritzeinheit
- 16a: Linearbewegungsmittel
- 16b: Gewindehülse
- 16c: Spindelkopf
- 16d: Planeten
- 16e: Stange
- 17, 51, 53: Lagerelement
- 18: Abstützelement
- 18a: topfartige Ausnehmung
- 23: Zwischenzahnräder
- 26: Rohr
- 27: Zylinder
- 30: Ringkolben
- 31: Holm
- 32, 33: Zylinderdeckel
- 34: stationärer Formträger
- 35: Maschinenfuß
- 37: Führung
- 39: Träger
- 41, 43: Rotor
- 41a, 43a: Verzahnung
- 42, 44: Stator
- 45: Tragelement
- 45a, 45b: Ausnehmungen
- 45c: Mittelteil
- 46, 47: Kupplungseinrichtungen
- 48: Zahnkranz
- 49: Mitnehmer
- 60: elektromechanische Dosiereinheit
- 61: Ausnehmung
- 62: Befestigungsmittel
- 63,71: Pfeil
- 64,65,69,70: Kanal
- 68: Durchtrittsbereich
- 72: hohle Welle
- 73,74: Kühlkanal
- s-s: Spritzachse
- t-t: Trennebene
- D: Kolben-Zylinder-Einheit
- E: erster Elektroantrieb
- R: zweiter Elektroantrieb

## Patentansprüche (Patentansprüche für folgende(n) Vertragsstaat(en): AT, CH, LI, FR, IT)

1. Spritzgießeinheit für eine Spritzgießmaschine zur Verarbeitung von Kunststoffen und anderer plastifizierbarer MAssen mit
- einem Trägerblock (10) zur Aufnahme eines Plastifizierzylinders (11),
- einer im Plastifizierzylinder (11) entlang einer Spritzachse (s-s) angeordneten Förderschnecke (12) zum Einspritzen der plastifizierbaren Masse in eine Form (13),
- einer axial entlang der Spritzachse (s-s) beweglichen Einspritzbrücke (14), an der die Förderschnecke (12) drehbeweglich Über wenigstens ein Lagerelement (15) gelagert ist,
- einer elektromechanischen Einspritzeinheit (16) zum axialen Bewegen von Einspritzbrücke (14) und Förderschnecke (12) mittels eines von einem ersten Elektroantrieb (E) angetriebenen Linearbewegungsmittel (16a), wobei die Achse des ersten Elektroantriebs (E) mit der Spritzachse (s-s) fluchtet,
- einer elektromechanischen Dosiereinheit (60) zum Drehen der Förderschnecke (12) mittels eines zweiten Elektroantriebs (R), dessen Achse ebenfalls mit der Spritzachse (s-s) fluchtet,
**dadurch gekennzeichnet, daß** die Elektroantriebe (E,R) an der Einspritzbrücke (14) beidseits von einer sich im wesentlichen quer zur Spritzachse erstreckenden Trennebene (t-t) angeordnet sind, die den Einflußbereich des ersten Elektroantriebs (E) vom Einflußbereich des anderen Elektroantriebs (R) trennt.

2. Spritzgießeinheit nach Anspruch 1, **dadurch gekennzeichnet, daß** ausgehend von der Trennebene (t-t) der zweite Elektroantrieb (R) sich in Richtung auf den Plastifizierzylinder erstreckt, während sich der erste Elektroantrieb (E) mit zugehörigem Linearbewegungsmittel (16a) in entgegengesetzter Richtung von der Trennebene (t-t) wegerstreckt.

3. Spritzgießeinheit nach Anspruch 1, **dadurch gekennzeichnet, daß** erster und zweiter Elektroantrieb (E, R) an einem Tragelement (45) der Einspritzbrücke (14) angeordnet sind und daß das Linearbewegungsmittel außerhalb der Einspritzbrücke (14) an einem Abstützelement (18) abgestützt ist.

4. Spritzgießeinheit nach Anspruch 1, **dadurch gekennzeichnet, daß** die Elektroantriebe (E,R) Rücken an Rücken in Ausnehmungen (45a,45b) eines Tragelements (45) der Einspritzbrücke (14) aufgenommen sind.

5. Spritzgießeinheit nach Anspruch 1, **dadurch gekennzeichnet, daß** die Elektroantriebe (E, R) weitgehend baugleich sind.

6. Spritzgießeinheit nach Anspruch 1, **dadurch gekennzeichnet, daß** die Elektroantriebe (E, R) mit zugehörigem Planetengetriebe eine bauliche Einheit bilden.

7. Spritzgießeinheit nach Anspruch 1, **dadurch gekennzeichnet, daß** das mit einem Rotor (41) des ersten Elektroantriebs (E) verbundene Linearbewegungsmittel (16a) der Einspritzeinheit (16) einen Spindelkopf (16c) aufweist, der in ein als Gewindehülse (16b) ausgebildetes und mit dem Linearbewegungsmittel zusammenwirkendes Element eintaucht, das am Abstützelement (18) drehfest abgestützt ist.

8. Spritzgießeinheit nach Anspruch 7, **dadurch gekennzeichnet, daß** zwischen Spindelkopf (16c) und Gewindehülse (16b) mehrere mit diesem zusammenwirkende Planeten (16d) angeordnet sind.

9. Spritzgießeinheit nach Anspruch 7, **dadurch gekennzeichnet, daß** eine Stange (16e) des Linearbewegungsmittels (16a) den Spindelkopf (16c) trägt und koaxial zur Achse der Stange (16e) von einem drehfest an der Einspritzbrücke (14) abgestützten Rohr (26) umgeben ist, das in jeder Stellung der Einspritzeinheit (16) in das Abstützelement (18) eintaucht.

10. Spritzgießeinheit nach Anspruch 1, **dadurch gekennzeichnet, daß** eine hydraulische Kolben-Zylinder-Einheit (D) zum Anlegen der Spritzgießeinheit an die Form (13) vorgesehen ist, deren Zylinder (27) auf den stationären, als Holme (31) ausgebildeten Kolbenstangen axial beweglich sind und mit Trägerblock (10) und Abstützelement (18) einen Rahmen bilden.

11. Spritzgießeinheit nach Anspruch 10, **dadurch gekennzeichnet, daß** der Trägerblock (10) im Bereich der vorderen Zylinderdeckel (32) und das Abstützelement (18) im Bereich der hinteren Zylinderdeckel (33) festgelegt ist, und daß die Einspritzbrücke (14) zwischen Trägerblock (10) und Abstützelement (18) auf den Zylindern (27) der Kolben-Zylinder-Einheit (D) axial beweglich ist und rotatorisch abgestützt ist.

12. Spritzgießeinheit nach Anspruch 1, **dadurch gekennzeichnet, daß** wenigstens einer der Elektroantriebe (E,R) ein Hohlwellenmotor ist.

13. Spritzgießeinheit nach Anspruch 12, **dadurch gekennzeichnet, daß** die Länge der Hohlwelle dem maximalen Hub der Förderschnecke (12) entspricht.

## Patentansprüche (Patentansprüche für folgende(n) Vertragsstaat(en): DE, GB)

1. Spritzgießeinheit für eine Spritzgießmaschine zur Verarbeitung von Kunststoffen und anderen plastifizierbaren Massen mit
- einem Trägerblock (10) zur Aufnahme eines Plastifizierzylinders (11),
- einer im Plastifizierzylinder (11) entlang einer Spritzachse (s-s) angeordneten Förderschnecke (12) zum Einspritzen der plastifizierbaren Masse in eine Form (13),
- einer axial entlang der Spritzachse (s-s) beweglichen Einspritzbrücke (14), an der die Förderschnecke (12) drehbeweglich über wenigstens ein Lagerelement (15) gelagert ist,
- einer elektromechanischen Einspritzeinheit (16) zum axialen Bewegen von Einspritzbrücke (14) und Förderschnecke (12) mittels eines von einem ersten Elektroantrieb (E) angetriebenen Linearbewegungsmittel (16a) wobei die Achse des ersten Elektroantriebs (E) mit der Spritzachse (s-s) fluchtet,
- einer elektromechanischen Dosiereinheit (60) zum Drehen der Förderschnecke (12) mittels eines zweiten Elektroantriebs (R), dessen Achse ebenfalls mit der Spritzachse (s-s) fluchtet,
**dadurch gekennzeichnet, dass** die Elektroantriebe (E, R) an der Einspritzbrükke (14) beidseits von einer sich im Wesentlichen quer zur Spritzachse erstrekkenden Trennebene (t-t) angeordnet sind, die den Einflussbereich des ersten Elektroantriebs (E) vom Einflussbereich des anderen Elektroantriebs (R) trennt, und dass das Linearbewegungsmittel (16a) außerhalb der Einspritzbrücke (14) an einem Abstützelement (18) abgestützt ist, das Teil eines den Trägerblock (10) umfassenden Kraftrahmens ist, der zugleich der Einspritzbrücke (14) als Führung dient.

2. Spritzgießeinheit nach Anspruch 1, **dadurch gekennzeichnet, daß** die Elektroantriebe (E,R) Rücken an Rücken in Ausnehmungen (45a,45b) eines Tragelements (45) der Einspritzbrücke (14) aufgenommen sind.

3. Spritzgießeinheit nach Anspruch 1, **dadurch gekennzeichnet, daß** die Elektroantriebe (E, R) weitgehend baugleich sind.

4. Spritzgießeinheit nach Anspruch 1, **dadurch gekennzeichnet, daß** die Elektroantriebe (E, R) mit zugehörigem Planetengetriebe eine bauliche Einheit bilden.

5. Spritzgießeinheit nach Anspruch 1, **dadurch gekennzeichnet, daß** das mit einem Rotor (41) des ersten Elektroantriebs (E) verbundene Linearbewegungsmittel (16a) der Einspritzeinheit (16) einen Spindelkopf (16c) aufweist, der in ein als Gewindehülse (16b) ausgebildetes und mit dem Linearbewegungsmittel zusammenwirkendes Element eintaucht, das am Abstützelement (18) drehfest abgestützt ist.

6. Spritzgießeinheit nach Anspruch 5, **dadurch gekennzeichnet, daß** zwischen Spindelkopf (16c) und Gewindehülse (16b) mehrere mit diesem zusammenwirkende Planeten (16d) angeordnet sind.

7. Spritzgießeinheit nach Anspruch 5, **dadurch gekennzeichnet, daß** eine Stange (16e) des Linearbewegungsmittels (16a) den Spindelkopf (16c) trägt und koaxial zur Achse der Stange (16e) von einem drehfest an der Einspritzbrücke (14) abgestützten Rohr (26) umgeben ist, das in jeder Stellung der Einspritzeinheit (16) in das Abstützelement (18) eintaucht.

8. Spritzgießeinheit nach Anspruch 1, **dadurch gekennzeichnet, daß** eine hydraulische Kolben-Zylinder-Einheit (D) zum Anlegen der Spritzgießeinheit an die Form (13) vorgesehen ist, deren Zylinder (27) auf den stationären, als Holme (31) ausgebildeten Kolbenstangen axial beweglich sind und mit Trägerblock (10) und Abstützelement (18) einen Rahmen bilden.

9. Spritzgießeinheit nach Anspruch 8, **dadurch gekennzeichnet, daß** der Trägerblock (10) im Bereich der vorderen Zylinderdeckel (32) und das Abstützelement (18) im Bereich der hinteren Zylinderdeckel (33) festgelegt ist, und daß die Einspritzbrücke (14) zwischen Trägerblock (10) und Abstützelement (18) auf den Zylindern (27) der Kolben-Zylinder-Einheit (D) axial beweglich ist und rotatorisch abgestützt ist.

10. Spritzgießeinheit nach Anspruch 1, **dadurch gekennzeichnet, daß** wenigstens einer der Elektroantriebe (E,R) ein Hohlwellenmotor ist.

11. Spritzgießeinheit nach Anspruch 10, **dadurch gekennzeichnet, daß** die Länge der Hohlwelle dem maximalen Hub der Förderschnecke (12) entspricht.

## Claims (Claims for the following Contracting State(s): AT, CH, LI, FR, IT)

1. Injection moulding unit for an injection moulding machine for the processing of plastic materials and other plasticisable substances, having
- a carrier block (10) for the accommodation of a plasticising cylinder (11),
- a feed screw (12) which is disposed in the plasticising cylinder (11) along an axis of injection (s-s) for the injection of the plasticisable substances into a mould (13),
- an injection bridge (14), which is displaceable axially along the axis of injection (s-s) and on which the feed screw (12) is rotatably mounted so as to be displaceable via at least one bearing element (15),
- an electro-mechanical injection unit (16) for the axial displacement of injection bridge (14) and feed screw (12) through the intermediary of a linear displacement means (16a) driven by a first electric drive (E), the axis of the first electric drive (E) being aligned with the axis of injection (s-s),
- an electro-mechanical dosing unit (60) for rotating the feed screw (12) through the intermediary of a second electric drive (R), the axis of which is also aligned with the axis of injection (s-s),
**characterised in that** the electric drives (E, R) are disposed on the injection bridge (14) on both sides of a parting plane (t-t) which extends substantially transverse to the axis of injection and separates the area of influence of the first electric drive (E) from the area of influence of the other electric drive (R).

2. Injection moulding unit in accordance with claim 1, **characterised in that** emanating from the parting plane (t-t), the second electric drive (R) extends in the direction of the plasticising cylinder, whilst the first electric drive (E) with the associated linear displacement means (16a) extends away from the parting plane (t-t) in the opposite direction.

3. Injection moulding unit in accordance with claim 1, **characterised in that** the first and second electric drives (E, R) are disposed on a supporting member (45) of the injection bridge (14) and that the linear displacement means is supported outside the injection bridge (14) on a supporting member (18).

4. Injection moulding unit in accordance with claim 1, **characterised in that** the electric drives (E, R) are accommodated back to back in recesses (45a, 45b) in a supporting member (45) of the injection bridge (14).

5. Injection moulding unit in accordance with claim 1, **characterised in that** the electric drives (E, R) are, to a great extent, constructed the same.

6. Injection moulding unit in accordance with claim 1, **characterised in that** the electric drives (E, R) with the associated planetary gearing form a structural unit.

7. Injection moulding unit in accordance with claim 1, **characterised in that** the linear displacement means (16a) of the injection unit (16), connected to a rotor (41) of the first electric drive (E), has a spindlehead (16c) which engages a member which is configured as a threaded sleeve (16b) and interacts with the linear displacement means, which member is fixedly supported on the supporting member (18).

8. Injection moulding unit in accordance with claim 7, **characterised in that** between spindlehead (16c) and threaded sleeve (16b) a plurality of planets are disposed interacting with the former.

9. Injection moulding unit in accordance with claim 7, **characterised in that** a rod (16e) of the linear displacement means (16a) supports the spindlehead (16c) and co-axially to the axis of the rod (16e) is surrounded by a pipe (26) which is fixedly supported on the injection bridge (14), which pipe engages the supporting member (18) in each position of the injection unit (16).

10. Injection moulding unit in accordance with claim 1, **characterised in that** a hydraulic piston-cylinder unit (D) is provided for the positioning of the injection moulding unit to the mould (13), the cylinders (27) of which are axially displaceable on the stationary piston rods, which are configured as braces (31) and together with carrier block (10) and supporting member (18) form a frame.

11. Injection moulding unit in accordance with claim 10, **characterised in that** the carrier block (10) is secured in the area of the front cylinder cover (32) and the supporting member (18) in the area of the rear cylinder cover (33), and that the injection bridge (14) is axially displaceable between the carrier block (10) and the supporting member (18) on the cylinders (27) of the piston-cylinder unit (D) and is supported in a rotational manner.

12. Injection moulding unit in accordance with claim 1, **characterised in that** at least one of the electric drives (E, R) is a hollow-shaft motor.

13. Injection moulding unit in accordance with claim 12, **characterised in that** the length of the hollow shaft corresponds to the maximum stroke of the feed screw (12).

## Claims (Claims for the following Contracting State(s): DE, GB)

1. Injection moulding unit for an injection moulding machine for the processing of plastic materials and other plasticisable substances, having
- a carrier block (10) for the accommodation of a plasticising cylinder (11),
- a feed screw (12) which is disposed in the plasticising cylinder (11) along an axis of injection (s-s) for the injection of the plasticisable substances into a mould (13),
- an injection bridge (14), which is displaceable axially along the axis of injection (s-s) and on which the feed screw (12) is rotatably mounted so as to be displaceable via at least one bearing element (15),
- an electro-mechanical injection unit (16) for the axial displacement of injection bridge (14) and feed screw (12) through the intermediary of a linear displacement means (16a) driven by a first electric drive (E), the axis of the first electric drive (E) being aligned with the axis of injection (s-s),
- an electro-mechanical dosing unit (60) for rotating the feed screw (12) through the intermediary of a second electric drive (R), the axis of which is also aligned with the axis of injection (s-s),
**characterised in that** the electric drives (E, R) are disposed on the injection bridge (14) on both sides of a parting plane (t-t) which extends substantially transverse to the axis of injection and separates the area of influence of the first electric drive (E) from the area of influence of the other electric drive (R) and that the linear displacement means is supported outside the injection bridge (14) on a supporting member (18), which together with the carrier block (19) part of a force frame, which serves as guiding for the injection bridge (14) at the same time.

2. Injection moulding unit in accordance with claim 1, **characterised in that** the electric drives (E, R) are accommodated back to back in recesses (45a, 45b) in a supporting member (45) of the injection bridge (14).

3. Injection moulding unit in accordance with claim 1, **characterised in that** the electric drives (E, R) are, to a great extent, constructed the same.

4. Injection moulding unit in accordance with claim 1, **characterised in that** the electric drives (E, R) with the associated planetary gearing form a structural unit.

5. Injection moulding unit in accordance with claim 1, **characterised in that** the linear displacement means (16a) of the injection unit (16), connected to a rotor (41) of the first electric drive (E), has a spindlehead (16c) which engages a member which is configured as a threaded sleeve (16b) and interacts with the linear displacement means, which member is fixedly supported on the supporting member (18).

6. Injection moulding unit in accordance with claim 5, **characterised in that** between spindlehead (16c) and threaded sleeve (16b) a plurality of planets are disposed interacting with the former.

7. Injection moulding unit in accordance with claim 5, **characterised in that** a rod (16e) of the linear displacement means (16a) supports the spindlehead (16c) and co-axially to the axis of the rod (16e) is surrounded by a pipe (26) which is fixedly supported on the injection bridge (14), which pipe engages the supporting member (18) in each position of the injection unit (16).

8. Injection moulding unit in accordance with claim 1, **characterised in that** a hydraulic piston-cylinder unit (D) is provided for the positioning of the injection moulding unit to the mould (13), the cylinders (27) of which are axially displaceable on the stationary piston rods, which are configured as braces (31) and together with carrier block (10) and supporting member (18) form a frame.

9. Injection moulding unit in accordance with claim 8, **characterised in that** the carrier block (10) is secured in the area of the front cylinder cover (32) and the supporting member (18) in the area of the rear cylinder cover (33), and that the injection bridge (14) is axially displaceable between the carrier block (10) and the supporting member (18) on the cylinders (27) of the piston-cylinder unit (D) and is supported in a rotational manner.

10. Injection moulding unit in accordance with claim 1, **characterised in that** at least one of the electric drives (E, R) is a hollow-shaft motor.

11. Injection moulding unit in accordance with claim 10, **characterised in that** the length of the hollow shaft corresponds to the maximum stroke of the feed screw (12).

## Revendications (Revendications pour l'(les) Etat(s) contractant(s) suivant(s): AT, CH, LI, FR, IT)

1. Unité de moulage par injection pour une machine à mouler par injection pour le traitement de matières plastiques et d'autres masses plastifiables comportant
- un bloc de support (10) destiné à recevoir un cylindre de plastification (11),
- une vis sans fin de transport (12) disposée dans le cylindre de plastification (11) le long d'un axe d'injection (s-s), pour l'injection de la masse plastifiable dans un moule (13),
- un pont d'injection (14) déplaçable axialement le long de l'axe d'injection (s-s), sur lequel la vis sans fin de transport (12) est supportée mobile à rotation par au moins un élément de palier (15),
- une unité d'injection électromécanique (16) pour le déplacement axial du pont d'injection (14) et de la vis sans fin de transport (12), à l'aide d'un moyen de déplacement linéaire (16a) entraîné par un premier dispositif d'entraînement électrique (E), l'axe du premier dispositif d'entraînement électrique (E) étant aligné avec l'axe d'injection (s-s),
- une unité de dosage électromécanique (60) pour la rotation de la vis sans fin de transport (12) au moyen d'un deuxième dispositif d'entraînement électrique (R) dont l'axe est également aligné avec l'axe d'injection (s-s),
**caractérisée en ce que** les dispositifs d'entraînement électriques (E, R) sont disposés sur le pont d'injection (14) des deux côtés d'un plan de séparation (t-t-) qui s'étend sensiblement transversalement à l'axe d'injection et qui sépare la zone d'influence du premier dispositif d'entraînement électrique (E) de la zone d'influence de l'autre dispositif d'entraînement électrique (R).

2. Unité de moulage par injection selon la revendication 1, **caractérisée en ce que** partant du plan de séparation (t-t), le deuxième dispositif d'entraînement électrique (R) s'étend en direction du cylindre de plastification, tandis que le premier dispositif d'entraînement électrique (E) avec son moyen de déplacement linéaire (16a) s'éloigne du plan de séparation (t-t), dans la direction opposée.

3. Unité de moulage par injection selon la revendication 1, **caractérisée en ce que** le premier et le deuxième dispositif d'entraînement électrique (E, R) sont disposés sur un élément porteur (45) du pont d'injection (14) et **en ce que** le moyen de déplacement linéaire prend appui contre un élément d'appui (18), à l'extérieur du pont d'injection (14).

4. Unité de moulage par injection selon la revendication 1, **caractérisée en ce que** les dispositifs d'entraînement électriques (E-R) sont reçus dos à dos dans des évidements (45a, 45b) d'un élément porteur (45) du pont d'injection (14).

5. Unité de moulage par injection selon la revendication 1, **caractérisée en ce que** les dispositifs d'entraînement électriques (E, R) sont largement de construction identique.

6. Unité de moulage par injection selon la revendication 1, **caractérisée en ce que** les dispositifs d'entraînement électriques (E, R) forment avec leur engrenage planétaire un ensemble constructif.

7. Unité de moulage par injection selon la revendication 1, **caractérisée en ce que** le moyen de déplacement linéaire (16a) de l'unité d'injection (16), relié à un rotor (41) du premier dispositif d'entraînement électrique (E), comporte une tête de broche (16c) qui pénètre dans un élément conformé en douille filetée (16b) et coopérant avec le moyen de déplacement linéaire, et qui est soutenu solidairement en rotation sur l'élément d'appui (18).

8. Unité de moulage par injection selon la revendication 7, **caractérisée en ce que** entre la tête de broche (16c) et la douille filetée (16b) sont disposés plusieurs planétaires (16d) coopérant avec ceux-ci.

9. Unité de moulage par injection selon la revendication 7, **caractérisée en ce qu'**une barre (16e) du moyen de déplacement linéaire (16a) porte la tête de broche (16c) et est entourée coaxialement à l'axe de la barre (16e), par un tube (26) soutenu solidairement en rotation sur le pont d'injection (14) et qui pénètre dans l'élément d'appui (18), dans toute position de l'unité d'injection (16).

10. Unité de moulage par injection selon la revendication 1, **caractérisée en ce qu'**il est prévu une unité hydraulique à cylindre et piston (D) pour placer l'unité de moulage par injection contre le moule (13), dont les cylindres (27) sont déplaçables axialement sur les tiges de piston fixes, configurées en longerons (31), et forment un cadre avec le bloc de support (10) et l'élément d'appui (18).

11. Unité de moulage par injection selon la revendication 10, **caractérisée en ce que** le bloc de support (10) est fixé dans la zone des couvercles de cylindre avant (32) et l'élément d'appui (18) dans la zone des couvercles de cylindre arrière (33), et **en ce que** le pont d'injection (14) est déplaçable axialement et soutenu en rotation entre le bloc de support (10) et l'élément d'appui (18), sur les cylindres (27) de l'unité à cylindre et piston (D).

12. Unité de moulage par injection selon la revendication 1, **caractérisée en ce qu'**au moins l'un des dispositifs d'entraînement électriques (E, R) est un moteur à arbre creux.

13. Unité de moulage par injection selon la revendication 12, **caractérisée en ce que** la longueur de l'arbre creux correspond à la course maximale de la vis sans fin de transport (12).

## Revendications (Revendications pour l'(les) Etat(s) contractant(s) suivant(s): DE, GB)

1. Unité de moulage par injection pour une machine a mouler par injection pour le traitement de matières plastiques et d'autres masses plastifiables comportant
- un bloc de support (10) destiné à recevoir un cylindre de plastification (11),
- une vis sans fin de transport (12) disposée dans le cylindre de plastification (11) le long d'un axe d'injection (s-s), pour l'injection de la masse plastifiable dans un moule (13),
- un pont d'injection (14) déplaçable axialement le long de l'axe d'injection (s-s), sur lequel la vis sans fin de transport (12) est supportée mobile à rotation par au moins un élément de palier (15),
- une unité d'injection électromécanique (16) pour le déplacement axial du pont d'injection (14) et de la vis sans tin de transport (12), a l'aide d'un moyen de déplacement linéaire (16a) entraîné par un premier dispositif d'entraînement électrique (E), l'axe du premier dispositif d'entraînement électrique (E) étant aligné avec l'axe d'injection (s-s),
- une unité de dosage électromécanique (60) pour la rotation de la vis sans fin de transport (12) au moyen d'un deuxième dispositif d'entraînement électrique (R) dont l'axe est également aligne avec l'axe d'injection (s-s),
**caractérisée en ce que** les dispositifs d'entraînement électriques (E, R) sont disposés sur le pont d'injection (14) des deux côtes d'un plan de séparation (t-t) qui s'étend sensiblement transversalement à l'axe d'injection et qui sépare la zone d'influence du premier dispositif d'entraînement électrique (E) de la zone d'influence de l'autre dispositif d'entraînement électrique (R) et **en ce que** le moyen de déplacement linéaire prend appui contre un élément d'appui (18), a l'extérieur du pont d'injection (14), quel élément d'appui est part d'un cadre de force qui est à la même temps la guidage pour le pont d'injection (14).

2. Unité de moulage par injection selon la revendication 1, **caractérisée en ce que** les dispositifs d'entraînement électriques (E-R) sont reçus dos à dos dans des évidements (45a, 45b) d'un élément porteur (45) du pont d'injection (14).

3. Unité de moulage par injection selon la revendication 1, **caractérisée en ce que** les dispositifs entraînement électriques (E, R) sont largement de construction identique.

4. Unité de moulage par injection selon la revendication 1, **caractérisée en ce que** les dispositifs entraînement électriques (E, R) forment avec leur engrenage planétaire un ensemble constructif.

5. Unité de moulage par injection selon la revendication 1, **caractérisée en ce que** le moyen de déplacement linéaire (16a) de l'unité d'injection (16), relie à un rotor (41) du premier dispositif d'entraînement électrique (E), comporte une tête de broche (16c) qui pénètre dans un élément conforme en douille filetée (16b) et coopérant avec le moyen de déplacement linéaire, et qui est soutenu solidairement en rotation sur élément d'appui (18).

6. Unité de moulage par injection selon la revendication 5, **caractérisée en ce que** entre la tête de broche (16c) et la douille filetée (16b) sont disposés plusieurs planétaires (16d) coopérant avec ceux-ci.

7. Unité de moulage par injection selon la revendication 5, **caractérisée en ce qu'**une barre (16e) du moyen de déplacement linéaire (16a) porte la tête de broche (16c) et est entourée coaxialement à l'axe de la barre (16e), par un tube (26) soutenu solidairement en rotation sur le pont d'injection (14) et qui pénètre dans élément d'appui (18), dans toute position de unité d'injection (16).

8. Unité de moulage par injection selon la revendication 1, **caractérisée en ce qu'**il est prévu une unité hydraulique à cylindre et piston (D) pour placer l'unité de moulage par injection contre le moule (13), dont les cylindres (27) sont déplaçables axialement sur les tiges de piston fixes, configurées en longerons (31), et forment un cadre avec le bloc de support (10) et élément d'appui (18).

9. Unité de moulage par injection selon la revendication 8, **caractérisée en ce que** le bloc de support (10) est fixe dans la zone des couvercles de cylindre avant (32) et élément d'appui (18) dans la zone des couvercles de cylindre arrière (33), et **en ce que** le pont d'injection (14) est déplaçable axialement et soutenu en rotation entre le bloc de support (10) et élément d'appui (18), sur les cylindres (27) de unité à cylindre et piston (D).

10. Unité de moulage par injection selon la revendication 1, **caractérisée en ce qu'**au moins l'un des dispositifs entraînement électriques (E, R) est un moteur à arbre creux.

11. Unité de moulage par injection selon la revendication 10, **caractérisée en ce que** la longueur de l'arbre creux correspond a la course maximale de la vis sans fin de transport (12).
